Europäisches Patentamt

European Patent Office

Office européen des brevets

(11) Numéro de publication : **0 569 280 A1**

# (12) DEMANDE DE BREVET EUROPEEN

(21) Numéro de dépôt : **93401139.6**

(22) Date de dépôt : **03.05.93**

(51) Int. Cl.⁵ : **H04L 1/00**

(30) Priorité : **06.05.92 FR 9205581**

(43) Date de publication de la demande :
**10.11.93 Bulletin 93/45**

(84) Etats contractants désignés :
**DE ES GB IT NL**

(71) Demandeur : **TELEDIFFUSION DE FRANCE
10, rue d'Oradour sur Glane
F-75015 Paris (FR)**

(72) Inventeur : **Lebrat, François
23, rue de Rungis
F-75013 Paris (FR)**
Inventeur : **Fouillet, Jean-Marie
41, rue du Colonel Moll
F-93330 Neuilly Sur Marne (FR)**

(74) Mandataire : **Fréchède, Michel et al
Cabinet Plasseraud 84, rue d'Amsterdam
F-75440 Paris Cédex 09 (FR)**

(54) **Procédé et système de transmission d'un signal numérique codé sur N bits par une interface d'émission-réception de signaux codés sur N+M bits, et leur utilisation en télévision numérique.**

(57)    L'invention est relative à un procédé de transmission d'un signal numérique codé sur N bits par une interface N+M bits.

A l'émission, à chaque mot codé (MCk) est associé un mot de qualification (MQk) codé sur au plus M bits, selon une loi de codage déterminée par corrélation avec la valeur du mot codé, pour constituer un mot qualifié, lequel est transmis, ce qui permet d'assurer à la réception une amélioration de la fiabilité de transmission.

Application à la transmission de signaux de télévision numérique.

FIG.1a.

EP 0 569 280 A1

La transmission à courte ou très courte distance des signaux numériques est actuellement assurée au moyen de câbles de liaison, soit par l'intermédiaire de liaisons par câbles coaxiaux en transmission série des signaux codés par mots sur un nombre donné de bits pour les distances inférieures à 300 mètres, soit par l'intermédiaire de liaisons par BUS ou câbles multiconducteurs en transmission parallèle de ces mêmes signaux pour des distances n'excédant pas quelques dizaines de mètres.

Un tel mode de transmission est largement utilisé dans le domaine de l'interconnexion des matériels de prise de vues et de retransmission en télévision numérique, en studio ou sur site.

Afin d'assurer la transmission des signaux de télévision numérique, deux types d'interfaces ont donc été définis par le C.C.I.R., Comité Consultatif International des Radiocommunications, en particulier par la Recommandation 656 volume XI Service de Radiodiffusion (Télévision du C.C.I.R.), d'une part, l'interface parallèle à 8 bits de données plus un signal d'horloge à 27 MHz, pour des liaisons intra-studio, et, d'autre part, l'interface série à 243 M bits/s pour des liaisons de quelques centaines de mètres.

Plus récemment, la société SONY a développé dès 1989 un jeu de circuits intégrés SBX 1601 A et SBX 1602 A permettant d'assurer les opérations de sérialisation/désérialisation de signaux de télévision numérique à un débit de 270 M bits/s. Le train de données séries à 270 M bits est obtenu par codage N.R.Z.I., dans l'ordre du bit de poids le plus faible au bit de poids le plus fort des bits de données à 10 bits délivrés par une interface parallèle, puis par un embrouillage réversible appliqué sur le train numérique précité par division par un polynôme générateur.

L'interface précitée a fait l'objet d'une normalisation codifiée par la norme UER documents techniques 32-67 et 32-68.

Théoriquement, la mise en oeuvre de l'interface précitée permet d'étendre la dynamique des données vidéo numériques de 8 à 10 bits. Toutefois, ces interfaces seront encore largement utilisées afin d'assurer la transmission de données sur 8 bits, notamment en raison de la pré-existence d'infrastructures ou équipements en 8 bits et du surcoût du passage en 10 bits.

Actuellement, les travaux relatifs à la métrologie des signaux numériques, notamment de télévision, concernent uniquement des méthodes applicables aux signaux définis par les Recommandations 601 et 656 du C.C.I.R., en l'absence d'une quelconque référence à l'extension possible des interfaces de 8 bits à 10 bits.

A cet effet, on pourra utilement se reporter aux publications essentielles ci-après :
- document d'Information Technique de l'UER I 15-1989 "Contrôle de la conformité des équipements vidéo-numériques avec les Recommandations 601 et 656 du C.C.I.R.", et
- rapport AH-11 du C.C.I.R., document 11/1057 du 15 janvier 1990 "Mesures et signaux d'essais pour installations mettant en oeuvre des signaux de télévision couleur codés dans le domaine numérique".

D'une manière générale, on pourra constater que les techniques de mesure actuelles des taux d'erreur de transmission reposent sur la génération, en amont d'une liaison, série ou parallèle, de signaux dont le contenu numérique est parfaitement connu, et sur l'acquisition, en aval de la liaison, des signaux au moyen de dispositifs réputés pour leur fiabilité d'enregistrement, tels que sonde d'acquisition de lignes vidéo-numériques, mémoires d'images numériques, afin d'opérer, en différé, une comparaison entre le signal émis et le signal reçu.

Ces techniques sont toutefois lourdes et coûteuses dans leur mise en oeuvre, et permettent seulement d'évaluer un taux d'erreur à partir d'une prise d'échantillons limitée dans le temps, mais ne peuvent, en aucun cas, permettre de qualifier le comportement réel d'une liaison susceptible d'évoluer en fonction soit de la composition du signal, séquence de la valeur des bits, soit de l'environnement relatif à la liaison, température et vieillissement des composants.

Concernant les compositions critiques du signal, celles pour lesquelles le comportement de la liaison peut apparaître défectueux, l'absence de transitions des séquences de bits ne pouvant plus permettre la discrimination des valeurs correspondantes des bits, il a été identifié, relativement à l'interface série 270 M bits, un jeu de signaux vidéo-numériques engendrant sur des interfaces de transmission série de longues séquences de zéro ou de un consécutifs, lesquels peuvent être critiques pour la récupération du signal d'horloge pendant ou après désérialisation.

En outre, dans le cas d'erreurs de transmission sur une liaison, la détection puis la correction d'erreurs éventuelles n'est prévue qu'en ce qui concerne les données de référence temporelle du signal vidéo, la correction ou dissimulation des erreurs sur les données vidéo ne pouvant être envisagée que suite à la mise en oeuvre d'équipements sophistiqués et coûteux en vue d'opérer une réduction du bruit.

La présente invention a pour objet de remédier à l'ensemble des inconvénients précités grâce à la mise en oeuvre d'un procédé et d'un système de transmission d'un signal numérique, codé sur N bits, au moyen d'une interface d'émission-réception de signaux codés sur un nombre plus important de N+M bits.

Un autre objet de la présente invention est, en ce qui concerne plus particulièrement le domaine de la télévision numérique, la mise en oeuvre de liaisons de signaux de télévision numérique à données de 8 bits utiles, conformes par exemple à la Recommandation 656 du C.C.I.R. actuellement en vigueur, permettant le transport de ces données sur des interfaces de données 10 bits, de façon à disposer d'un moyen simple de détection d'erreurs de transmission.

Un autre objet de la présente invention est, en conséquence, la détection des erreurs de transmission en temps réel et la qualification objective de la qualité d'une liaison en termes de taux d'erreur.

Un autre objet de la présente invention est, en outre, en raison du taux de succès de la détection d'erreur précitée, la mise en oeuvre, en temps réel, d'un processus de dissimulation d'erreur sur les données vidéo d'un signal de télévision numérique.

Un autre objet de la présente invention est, enfin, du fait de la seule définition de modes de codage particulier des mots ou échantillons numériques à l'émission, une sécurisation du transport des données numériques précitées lors de l'utilisation d'une interface série à 270 M bits/s grâce à l'interdiction de certaines séquences critiques de données ou mots codés sur 10 bits.

Le procédé de transmission d'un signal numérique codé par mots sur N bits, par une interface d'émission-réception N + M bits, objet de la présente invention, est remarquable en ce qu'il consiste, à l'émission, en amont de ladite interface, successivement :
- à associer à chaque mot codé, formant ledit signal numérique, un mot de qualification, codé au plus sur M bits, ce mot de qualification étant formé par codage selon une loi de codage déterminée, par corrélation avec la valeur du mot codé, et constituant avec le mot codé un mot qualifié. Chaque mot qualifié est alors transmis par l'intermédiaire de l'interface d'émission-réception, ce qui permet, à la réception en aval de l'interface d'émission-réception, une amélioration de la fiabilité de transmission.

Le système de transmission d'un signal numérique codé par mots sur N bits par une interface d'émission-réception N+M bits, objet de la présente invention, est remarquable en ce qu'il comprend à l'émission, en amont de ladite interface d'émission-réception, un circuit de codage comprenant un bloc de codage d'un mot de qualification, codé sur au plus M bits, ce mot de qualification étant formé par codage selon une loi de codage déterminée par corrélation avec la valeur du mot codé, et un bloc de concaténation du mot codé et du mot de qualification pour former un mot qualifié, délivré à l'interface d'émission-réception pour transmission.

Le procédé et le système de transmission d'un signal numérique codé par mots sur N bits par une interface d'émission-réception N+M bits, objets de la présente invention, trouvent application à la transmission de signaux numériques quelconques, c'est-à-dire porteurs d'une information de nature quelconque, mais sont plus particulièrement adaptés à la transmission de signaux de télévision numérique pour lesquels ils permettent alors la mise en oeuvre d' applications spécifiques correspondantes.

Le procédé et le système de transmission d'un signal numérique selon l'invention seront décrits ci-après de façon plus détaillée dans la description et dans les dessins dans lesquels :
- la figure 1a représente, de manière illustrative, le procédé de transmission d'un signal numérique, à l'émission, conformément à l'objet de la présente invention,
- la figure 1b représente, de manière illustrative, un mode de réalisation particulier du procédé objet de la présente invention, illustré en figure 1a, dans le cas d'une transmission par une interface série,
- la figure 1c représente, de manière illustrative, un mode de réalisation particulier du procédé objet de la présente invention, illustré en figure la dans le premier cas d'une transmission par une interface parallèle,
- la figure 2a représente, de manière illustrative, le procédé de transmission d'un signal numérique, à la réception, conformément à l'objet de la présente invention,
- la figure 2b représente, sous forme d'organigramme simplifié, un mode particulier de mise en oeuvre du procédé tel que représenté en figure 2a, plus spécialement adapté à la partie vidéo d'un signal de télévision numérique,
- la figure 2c représente, sous forme d'organigramme simplifié, un mode particulier de mise en oeuvre du procédé, tel que représenté en figure 2a et 2b, plus spécialement adapté à un signal de télévision numérique,
- la figure 3a représente, selon un schéma de blocs fonctionnels, un système de transmission d'un signal numérique codé par mots sur N bits par une interface d'émission-réception N+M bits conforme à l'objet de la présente invention,
- les figures 3b et 3c représentent respectivement une interface d'entrée respectivement de sortie de signaux numériques utilisés dans le système objet de la présente invention représenté en figure 3a,
- la figure 4a représente un mode de réalisation non limitatif d'un circuit de codage, à l'émission, entrant dans la configuration de réalisation du système objet de la présente invention,
- la figure 4b représente une variante de réalisation non limitative du circuit de codage représenté en figure 4a, permettant une mise en oeuvre particulièrement simple de l'affectation des M bits de poids faible constituant le mot de qualification,

- la figure 5a représente un premier mode de réalisation non limitatif du circuit de décodage, à la réception, entrant dans la configuration de réalisation du système objet de la présente invention,
- la figure 5b représente une variante de réalisation non limitative du circuit de décodage, à la réception, tel que représenté en figure 5a,
- la figure 5c représente un exemple de réalisation non limitatif d'un élément particulier représenté en figure 5b,
- la figure 6 est relative à une variante particulière du circuit de décodage, plus particulièrement destinée à permettre la réalisation d'une fonction de dissimulation des erreurs de transmission en temps réel.

Une description plus détaillée du procédé de transmission d'un signal numérique codé par mots sur N bits au moyen d'une interface d'émission-réception N+M bits sera maintenant donnée en liaison avec les figures la à 1c et 2a à 2c.

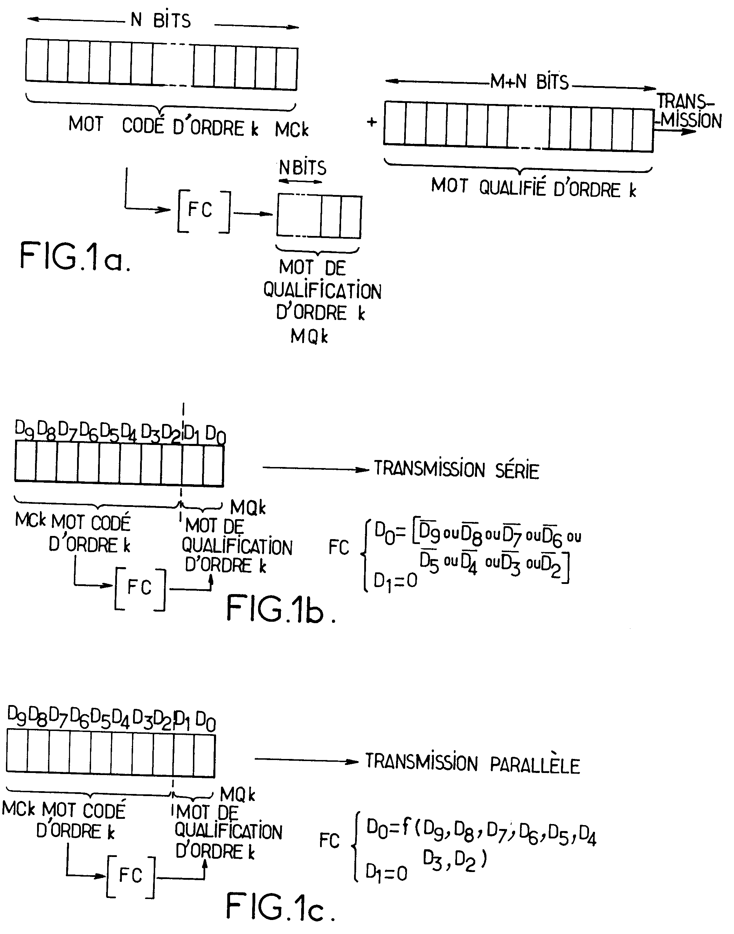

Ainsi qu'on l'a représenté sur la figure 1a, le procédé consiste, à l'émission, c'est-à-dire en amont de l'interface précédemment citée, à effectuer les étapes successives ci-après.

A chaque mot codé MCk formant le signal numérique transmis est associé un mot de qualification, MQk, codé au plus sur M bits. Le mot codé d'ordre k considéré est ainsi associé au mot de qualification de même ordre k considéré. Le mot de qualification est formé par codage selon une loi de codage déterminée, par corrélation avec la valeur du mot codé et constitue avec le mot codé un mot qualifié d'ordre k correspondant.

Ensuite, chaque mot qualifié d'ordre k est transmis par l'intermédiaire de l'interface d'émission-réception, ce qui permet d'assurer à la réception, en aval de l'interface précité, une amélioration de la fiabilité de transmission.

Dans le cas d'un signal de télévision numérique codé sur 8 bits, N=8, le mot de qualification est codé sur au plus M=2 bits.

On notera bien sûr que le procédé de transmission d'un signal numérique objet de la présente invention peut être mis en oeuvre, soit dans le cadre d'une transmission par l'intermédiaire d'une interface d'émission-réception série, ainsi que représenté en figure 1b, soit dans le cas d'une transmission par l'intermédiaire d'une interface d'émission-réception parallèle, ainsi que représenté en figure 1c.

Dans le cas d'une transmission par l'intermédiaire d'une interface d'émission-réception série, le signal numérique étant sérialisé préalablement à la transmission, le mot de qualification, MQk, est alors formé par affectation des M bits de poids faible. Le bit DO de poids le plus faible peut alors être codé selon une fonction de la valeur des M bits du mot codé et les M-1 autres bits, D1, de poids faible, sont par exemple affectés à une valeur déterminée.

Ainsi qu'on l'a d'ailleurs représenté en figure 1b de manière non limitative, le bit DO de poids le plus faible peut être affecté à la valeur du complément de l'un des M bits de poids fort, ou à la valeur du complément des M-1 autres bits de poids faible, le bit D1 de poids faible étant affecté par exemple à la valeur 0.

Dans le cas d'une transmission par l'intermédiaire d'une interface d'émission-réception parallèle, ainsi que représenté en figure 1c, le mot de qualification MQk peut être formé par affectation des M bits de poids le plus faible, le bit de poids le plus faible DO étant affecté à une valeur de contrôle, cette valeur de contrôle étant fonction de la valeur des N bits de poids fort du mot codé, MCk, et les autres M-1 bits de poids faible, D1, étant affectés à une valeur déterminée, la valeur O dans le cas de la figure 1c. On notera que sur les figures 1a à 1c, le terme [FC] désigne une fonction de codage permettant d'obtenir le mot de qualification MQk à partir du mot codé MCk d'ordre k correspondant.

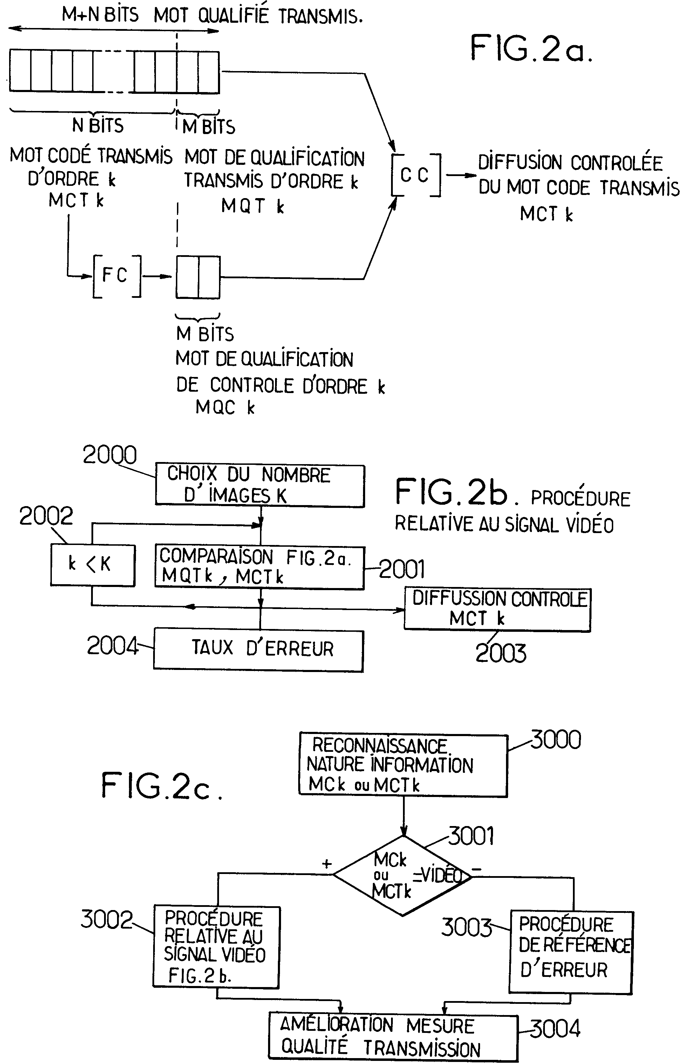

Une description plus détaillée du processus de transmission du signal numérique codé ainsi que décrit précédemment, au niveau de la réception de ce signal transmis, c'est-à-dire en aval de l'interface d'émission-réception, sera maintenant donnée en liaison avec les figures 2a à 2c.

Ainsi qu'on l'a représenté en figure 2a, le procédé selon l'invention consiste alors à discriminer, dans le mot qualifié transmis d'ordre k, le mot codé transmis et le mot de qualification transmis d'ordre k correspondant et notés respectivement MCTk, MQTk. Un mot de qualification de contrôle, noté MQCk, d'ordre k, est alors établi par codage selon la loi de codage déterminée, par corrélation avec la valeur du mot codé transmis MCTk. La fonction de codage correspondante est notée bien entendu [FC], cette fonction de codage étant identique à celle utilisée au niveau de la transmission ainsi que représenté en figures 1a à 1c.

Conformément au processus de transmission selon l'invention, une comparaison de la corrélation du mot codé et du mot de qualification à l'émission avec la corrélation du mot codé transmis et du mot de qualification transmis à la réception est ensuite effectuée, cette comparaison étant notée [CC] sur la figure 2a. Cette comparaison intervient bien entendu sur le mot de qualification transmis d'ordre k, MQTk, et sur le mot de qualification de contrôle d'ordre k, MQCk.

Une diffusion contrôlée du mot codé transmis MCTk d'ordre k est alors effectuée sur critère de qualité à partir de la comparaison précédemment [CC] mentionnée. On comprendra bien sûr que l'identité du mot de qualification transmis d'ordre k, MQTk, et du mot de qualification de contrôle d'ordre k, MQCk, pourra être retenue.

On notera que le procédé objet de la présente invention définit en fait un jeu de techniques permettant la mise en oeuvre des liaisons de signaux de télévision numérique à données de 8 bits utiles, conformes à la recommandation 656 du C.C.I.R. actuellement en vigueur, sur des interfaces permettant le transport de données de 10 bits de manière à disposer d'un moyen simple de détection d'erreurs de transmission.

De cette manière, il est possible de détecter les erreurs de transmission en temps réel et de qualifier objectivement la qualité d'une liaison en termes de taux d'erreur.

Ainsi, dans le cas d'un signal de télévision numérique précédemment cité, ainsi qu'on l'a représenté en figure 2b, la diffusion contrôlée du mot codé transmis d'ordre k, MCTk, sur critère de qualité à partir de la comparaison de la corrélation peut alors être effectuée sur un nombre K d'images utiles, de façon à déterminer un taux d'erreur correspondant. Le procédé selon l'invention peut alors comporter une étape 2000 consistant en un choix du nombre d'images K utiles, suivi d'une étape 2001 de comparaison du mot de qualification transmis d'ordre k, MQTk, et du mot de qualification de contrôle k, MQCk, ce processus de comparaison correspondant au mode opératoire représenté en figure 2a. On notera qu'un bouclage par l'intermédiaire d'un test 2002 de comparaison de l'ordre courant k à la valeur du nombre d'images K permet d'effectuer la comparaison précitée sur le nombre d'images choisies. La diffusion contrôlée peut être réalisée en une étape 2003, diffusion contrôlée du mot de code transmis, MCTk, et le taux d'erreur peut être calculé en une étape 1004, ce taux d'erreur étant défini comme le rapport du nombre d'erreurs détectées, suite à la comparaison des corrélations, au nombre de mots codés transmis constitutifs des K images considéré.

Conformément à un autre aspect du procédé objet de la présente invention, et de manière à prendre en compte l'évolution de la norme des signaux de télévision numérique, laquelle devra non seulement définir l'extension possible de codage des données vidéo de 8 bits à 10 bits, mais aussi statuer dans le même contexte sur les autres données du multiplex numérique, telles que données de référence temporelles, données auxiliaires, etc, la mise en oeuvre des principes de détection d'erreur précédemment mentionnés peut être accompagnée d'une sélection des données à contrôler en fonction de la structure du multiplex vidéo-numérique considéré.

Dans ce but, ainsi que représenté en figure 2c, le procédé objet de la présente invention peut consister de manière avantageuse, tant à l'émission qu'à la réception, à effectuer une discrimination et une reconnaissance de la nature de l'information transmise par chaque mot codé, étape 3000 de la figure 2c, les mots codés consistant, soit en mots codés transmis d'ordre k, MCTk, soit en mots codés d'ordre k, MCk.

L'étape 3000 précitée est suivie d'une étape de test 3001 permettant de déterminer si le mot codé, ou le mot codé transmis précité, fait partie des données vidéo actives. Sur réponse positive au test précité, une étape 3002 relative au signal vidéo telle que représentée en figure 2b peut alors être réalisée afin d'effectuer ensuite une amélioration ou une mesure de la qualité de transmission telle que le taux d'erreur, par exemple en une étape 3004.

Sur réponse négative au test 3001 précité, une procédure de référence d'erreur 3003 peut être réalisée, cette procédure pouvant correspondre à une procédure de l'art antérieur, relativement non plus aux données vidéo actives, mais aux données relatives à la supression de lignes vidéo ou de synchronisation, par exemple. L'étape 3003 est alors suivie de l'étape 3004 précédemment mentionnée relativement à ce type de données.

On comprendra ainsi que grâce à la sélection en fonction de la nature de l'information ainsi discriminée, il est possible d'effectuer une sélection de la loi de codage par corrélation avec la valeur du mot codé, ce qui permet bien entendu d'améliorer la mesure de la qualité de transmission.

Différents exemples de mise en oeuvre du procédé objet de la présente invention seront maintenant donnés dans des cas spécifiques relatifs à la transmission de données numériques par l'intermédiaire d'une interface parallèle à 10 bits, puis d'une interface série à 270 Mb/s, ces derniers signaux étant plus spécifiquement des signaux numériques de télévision.

En premier lieu, dans le cas de l'application relative au transport des signaux numériques sur une interface parallèle à 10 bits, et du fait de la séparation des chemins physiques pour le transport des bits de données sur une telle interface parallèle, le contrôle de la validité des bits de poids le plus faible, DO et D1, ne peut être suffisant pour qualifier objectivement le transport des bits de poids le plus élevé, D2 à D9. Cependant, en admet- tant que le comportement physique des bits DO et D1 soit représentatif des autres chemins de l'interface, le taux d'erreur de transmission de l'interface parallèle précité peut être évalué à partir du taux de sélection d'erreur simple sur les bits DO et D1, selon les relations suivantes:

- taux d'erreur de l'interface :

        = 10 x taux d'erreur simple sur le bit DO,
        = 10 x taux d'erreur simple sur le bit D1,
        = 5 x taux d'erreur simple sur le bit DO ou sur le bit D1.

Dans le cas, au contraire, d'une application au cas de l'interface série à 270 Mb/s et du fait de l'embrouillage des bits de données par division par le polynôme générateur

$$G(x) = (X^9 + X^4 + 1).(X + 1)$$

dans le processus de sérialisation, il n'y a aucune corrélation entre les erreurs intervenant lors du transport série à 270 Mb/s et l'affectation des erreurs sur les bits de l'interface parallèle après désérialisation.

De ce fait, le contrôle de la validité des bits de poids le moins élevé, DO et D1, après désérialisation est représentatif des erreurs de transport de l'interface série à 270 Mb/s.

Avec un contrôle de la validité du bit DO ou du bit D1, la détection des erreurs de transmission atteint un taux de succès de 50 %.

De même, un contrôle sur l'identité des bits DO et D1, bits de poids le moins élevé, permet de détecter les erreurs de transmission avec un taux de succès de 50 %.

Enfin, un contrôle de la validité du bit DO et du bit D1 permet de détecter les erreurs de transmission avec un taux de succès de 75 %.

Conformément à un aspect particulièrement avantageux du procédé objet de la présente invention, tout dispositif permettant de corréler la valeur des bits de poids le moins élevé, DO et D1 à la valeur des autres bits de poids le plus élevé, D2 à D9, peut être mis à profit pour améliorer l'efficacité de la détection d'erreurs sur le transport de données 8 bits sur une interface 10 bits.

Conformément à la présente invention, l'affectation de la valeur des bits de poids le moins élevé, DO et D1, avant leur transport sur l'interface précitée, et la vérification à la réception de la corrélation des bits de l'interface en fonction de la loi de codage utilisée permet une amélioration de l'efficacité de la détection d'erreurs.

Ainsi que décrit précédemment, et afin de minimiser l'erreur de détermination des niveaux vidéo dans le cas d'un interfaçage avec un équipement traitant des données vidéo-numériques d'une dynamique de 10 bits, le procédé objet de la présente invention consiste à affecter le bit D1 à la valeur 0 par exemple, et le bit de poids le plus faible DO à un bit de contrôle calculé en faisant intervenir les 8 bits actifs des données. Le simple contrôle, à la réception, du bit de poids le plus faible DO permet de détecter les erreurs de transmission avec un taux de succès de 50 %.

En outre, conformément à un aspect particulièrement avantageux du procédé objet de la présente invention, celui-ci permet d'obtenir une amélioration de la robustesse des interfaces série à 270 Mb/s. On rappelle que la robustesse de transmission d'une interface, telle qu'une interface série, désigne l'aptitude de l'interface à une transmission fidèle du signal d'origine, quelle que soit la séquence série de bits transmise.

On rappelle en effet que certaines séquences de données peuvent être critiques pour la transmission par une interface série à 270 Mb/s, car ces séquences engendrent des longues séquences dans le domaine série de valeur 0 ou de valeur 1, et peuvent ainsi, de par la forme du signal analogique engendré, nuire à la récupération du signal d'horloge pour la désérialisation.

On indique en outre, relativement à l'interface série précité, que la séquence de données 100 h,088 h,100 h, 088 h, laquelle correspond dans le domaine 8 bits à la séquence 40 h,22 h,40 h,22 h, engendre après sérialisation des séquences de 20 zéros consécutifs suivies de 20 uns consécutifs.

D'autre séquences peuvent être déduites facilement à partir de la séquence précitée, par décalage de un bit sur le train série, et présentent la même caractéristique dans le domaine série. Ces séquences sont décrites dans le tableau ci-après avec diverses notations.

## Tableau 1

Séquences de données 10 bits générant un signal série périodique de 20 zéros et 20 uns consécutifs

| Séquence | 10 bits hexa | 8 bits + 2 bits hexa | décimale | 8 bits licite |
|---|---|---|---|---|
| 1 | 100/088/100/... | 40.0/22.0/40.0/... | 64,00/34,00/64,00/.. | OK |
| 2 | 110/200/110/... | 44.0/80.0/44.0/... | 68,00/128,00/68,00/... | OK OK |
| 3 | 220/000/220/... | 88.0/00.0/88.0/... | 136,00/00,00/136,00/... | OK OK |
| 4 | 042/001/042/... | 10.8/00.4/10.8/... | 16,50/00,25/16,50/... | |
| 5 | 084/002/084/... | 21.0/00.8/21.0/... | 33,00/00,50/33,00/... | |
| 6 | 108/004/108/... | 42.0/01.0/42.0/... | 66,00/01,00/66,00/... | OK |
| 7 | 210/008/210/... | 84.0/02.0/84.0/... | 132,00/02,00/132,00/... | OK |
| 8 | 020/011/020/... | 08.0/04.4/08.0/... | 08,00/04,25/08,00/... | |
| 9 | 040/022/040/... | 10.0/08.8/10.0/... | 16,00/08,50/16,00/... | OK OK |
| 10 | 080/044/080/... | 20.0/11.0/20.0/... | 32,00/17,00/32,00/... | |

Le procédé objet de la présente invention consiste alors à affecter les bits de poids le plus faible DO et D1 afin d'interdire la génération de ce type de séquence lorsque l'interface série à 270 Mb/s est utilisée pour le transport de données à 8 bits.

Afin de limiter l'erreur de détermination des niveaux vidéo dans le cas d'un interfaçage avec un équipement traitant des données vidéo-numériques d'une dynamique de 10 bits, le procédé objet de la présente invention consiste à affecter le bit de poids faible D1 à 0, et à interdire l'apparition des séquences critiques en affectant le bit de poids le plus faible DO en fonction de la valeur des données 8 bits. Ainsi, un processus conforme à l'objet de la présente invention peut-il consister à affecter la valeur du bit de poids le plus faible DO par simple relation logique avec la valeur d'un des bits de données.

A titre d'exemple non limitatif, ainsi que décrit précédemment, le bit de poids le plus faible DO peut être affecté à la valeur de complément d'un des bits de poids le plus élevé D2 à D9.

Le contrôle de la loi d'affectation des bits, lors de la détection d'erreurs, permet d'atteindre un taux de détection d'erreurs de 87,5 %. D'autres affectations peuvent permettre d'éliminer certaines séquences critiques, mais ne seront pas décrites car elles ne couvrent pas l'ensemble des séquences critiques précitées.

Enfin, une dernière méthode peut consister à affecter simplement le bit de poids le plus faible DO à la valeur 1, ce qui permet d'interdire la génération de l'ensemble des séquences critiques précitées.

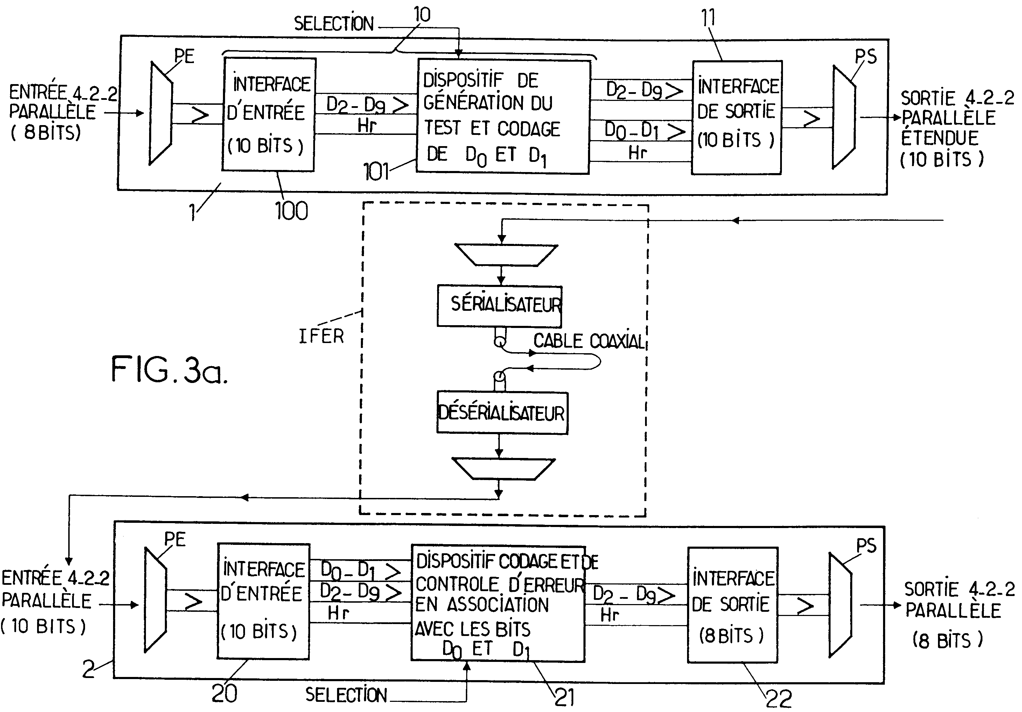

Une description plus détaillée d'un système de transmission d'un signal numérique codé par mots sur N bits au moyen d'une interface d'émission-réception N+M bits, conforme à l'objet de la présente invention, sera maintenant donnée en liaison avec les figures 3a à 3c et suivantes.

Le mode de réalisation décrit du système de transmission d'un signal numérique codé par mots de N bits au moyen d'une interface d'émission-réception N+M bits objet de la présente invention, tel que décrit ci-après dans la description, est basé sur une réalisation, laquelle s'est appuyée sur l'architecture des équipements en usage actuellement pour la transmission de signaux de télévision.

Ainsi que représenté sur la figure 3a, le système objet de la présente invention comprend, à l'émission, c'est-à-dire en amont de l'interface d'émission-réception, notée IFER, un circuit de codage, noté 1, lequel comprend un circuit 10 de codage d'un mot de qualification, MQk, codé sur au plus M bits. Ce mot de qualification est formé par codage selon une loi de codage déterminée par corrélation avec la valeur du mot codé MCk. Le circuit de codage 1 comprend, en outre, un circuit 11 de concaténation du mot codé et du mot de qualification pour former un mot qualifié. Le mot qualifié est délivré à l'interface d'émission-réception IFER pour transmission.

D'une première part, on comprendra que l'interface d'émission-réception IFER est une interface de type connu, cette interface comprenant, ainsi que représenté en figure 3a, une entrée parallèle 4-2-2 étendue à 10 bits, cette entrée parallèle étant, de manière conventionnelle, représentée par un trapèze, un sérialisateur permettant d'assurer la sérialisation des bits de données, c'est-à-dire la transmission série des bits transmis par l'entrée parallèle précitée, un câble coaxial permettant d'assurer la transmission série des bits précités, et, à l'extrémité de l'interface d'émission-réception, un désérialisateur suivi d'une sortie 4-2-2 parallèle étendue 10 bits, représentée également par un trapèze. Les différents éléments, sérialisateur, désérialisateur, de l'interface d'émission-réception IFER ne seront pas décrits en détail, car ils correspondent à des éléments parfaitement connus de l'homme de métier. Il en est de même en ce qui concerne les ports d'entrée parallèle 4-2-2 et de sortie parallèle 4-2-2 de l'interface d'émission-réception IFER.

Sur la figure 3a, on a représenté le circuit de codage 1 comportant un port d'entrée parallèle 4-2-2 à 8 bits, puis successivement interconnecté par un bus de liaison, et en particulier, dans le cas d'un signal de télévision numérique codé sur N=8 bits pour lequel le mot de qualification est codé sur M=2 bits, le circuit 10 de codage du mot de qualification, puis le circuit 11 de concaténation du mot codé MCk et du mot de qualification MQk pour former un mot qualifié.

Ainsi qu'on l'observera sur la figure 3a, le circuit 10 de codage peut comprendre successivement un circuit 100 d'interface d'entrée permettant de séparer d'une part les N bits de poids fort D9 à D2, des M bits de poids faible, DO et D1, ainsi que le signal d'horloge. Le signal d'horloge est noté Hr sur la figure précitée. En outre, le circuit 10 de codage comprend, interconnecté au circuit 100 d'interface d'entrée, un circuit 101 générateur de codage par affectation des M bits de poids faible.

Le circuit de codage 10 est alors relié par l'intermédiaire d'une liaison double par bus au circuit 11 de concaténation du mot codé et du mot de qualification, le mot codé MCk étant délivré par un premier bus transmettant les bits D2 à D9 et le mot de qualification MQk étant transmis par un deuxième bus transmettant les bits de poids les plus faibles DO et D1. Le signal d'horloge Hr est également transmis au circuit 11 de concaténation. Le circuit 11 de concaténation est alors lui-même relié à un port de sortie PS parallèle étendu sur 10 bits.

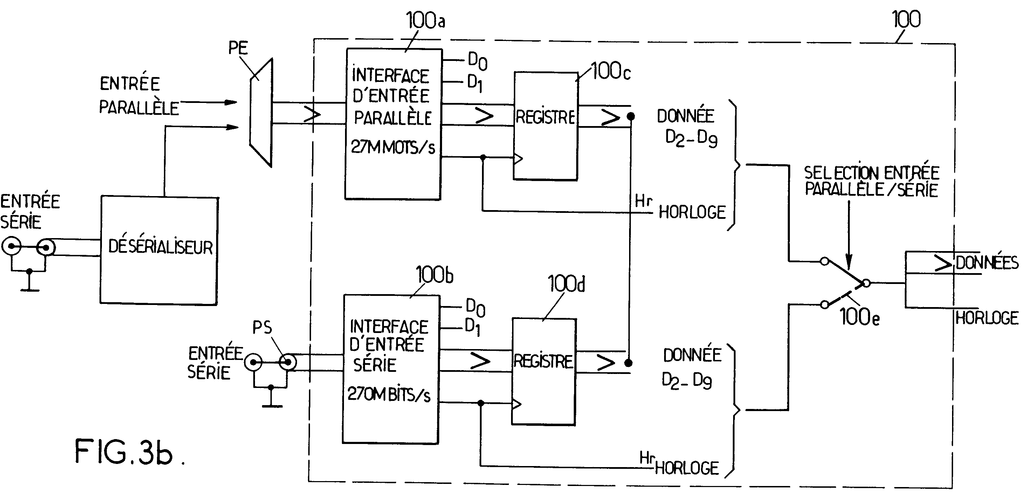

En ce qui concerne le circuit 100 d'interface d'entrée, celui-ci peut être réalisé, ainsi que représenté en figure 3b, à partir d'une entrée parallèle par un port parallèle PE ou d'une entrée série par un port série PS. Le circuit 100 d'interface d'entrée comprend alors une interface d'entrée parallèle 100a à 27 M mots/s, une interface d'entrée série 100b à 270 M bits/s, ces interfaces permettant de séparer les bits de poids le plus faible, DO, D1, et les bits de poids le plus fort, bits de donnés D2-D9, lesquels sont mémorisés par des registres intermédiaires 100c, respectivement 100d. Un élément de sélection entrée parallèle-série 100e est prévu, lequel permet de passer à l'une ou l'autre des entrées pour délivrer les bits de données D2-D9 et le signal d'horloge Hr. Ce type de circuit ne sera pas décrit plus en détails. On indiquera simplement que l'entrée parallèle est appliquée au circuit d'interface 100a assurant la récupération des données de l'horloge et leur mise au niveau logique adapté aux composants qui les utiliseront (TTL ou CMOS par exemple). L'entrée série par l'intermédiaire de l'interface d'entrée-série 100b est appliquée au circuit d'interface précité, lequel assure les corrections et synchronisations nécessaires à la récupération des données parallèles, et leur mise au niveau logique adapté aux composants qui les utiliseront ultérieurement.

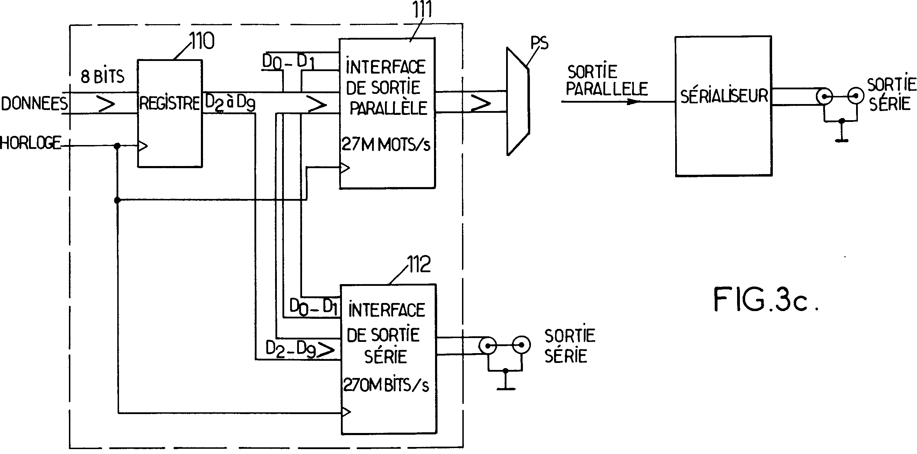

Le circuit 11 de concaténation du mot codé MCk et du mot de qualification MQk est formé par un circuit d'interface de sortie sur N+M bits, soit sur 10 bits, permettant d'engendrer le mot codé qualifié à transmettre. Ce circuit peut comporter, ainsi que représenté en figure 3c, un registre de mémorisation des bits de données D2 à D9, suivi, d'une part, d'un circuit d'interface de sortie parallèle à 27 M mots/s, et d'une interface de sortie série à 270 Mb/s. Ces circuits d'interface sont notés respectivement, 111, 112, le registre étant noté 110. On notera bien sûr que les circuits d'interface de sortie parallèle, respectivement série 111 et 112, reçoivent également par un bus de liaison les bits de poids les moins élevés, DO et D1, après codage. Le circuit 111 correspond à un circuit d'interface parallèle selon la recommandation 656 du C.C.I.R. et le circuit 112 correspond à une interface série à 270 Mb/s.

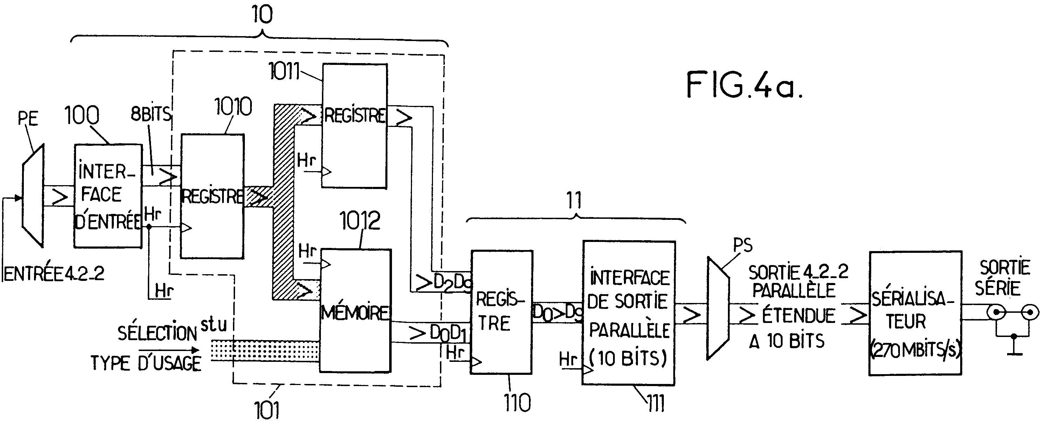

Une description plus détaillée du circuit 101 générateur de codage par affectation des M bits de poids faible, c'est-à-dire dans l'application considérée des deux bits de poids faible, DO et D1, sera maintenant donnée en liaison avec la figure 4a.

Selon la figure précitée, le circuit générateur de codage 101 comprend, interconnecté en cascade au circuit d'interfaçage d'entrée 100, un premier registre tampon, 1010, lequel est destiné à assurer la mémorisation temporaire des N bits de poids élevé D2 à D9 constituant les données, ce registre tampon étant bien entendu piloté par le signal d'horloge Hr. Un deuxième registre, 1011, constituant un registre tampon est prévu, lequel est interconnecté en sortie du registre tampon, 1010, et est plus particulièrement destiné à assurer un retard de transmission d'une période d'horloge des N bits de poids fort D2 à D9 formant le mot codé. Une mémoire, 1012, est prévue, cette mémoire étant de type programmable et recevant sur un port d'entrée les signaux de donnée, c'est-à-dire les bits de poids le plus élevé D2 à D9, et sur une entrée de lecture, ou port de commande, un signal de commande de sélection de type d'usage, noté stu. La mémoire 1012 permet ainsi de délivrer le mot de qualification MQk codé sur M bits, c'est-à-dire sur les bits DO et D1 de poids le plus faible. Bien entendu, le deuxième registre tampon 1011 et la mémoire 1012 de type mémoire programmable sont reliés par l'intermédiaire d'une liaison par bus au registre 110 du circuit 11 de concaténation du mot codé et du mot de qualification.

On notera que le registre 1011 et la mémoire 1012 sont ainsi utilisés pour engendrer par codage selon une loi de codage déterminée, par corrélation avec la valeur du mot codé, c'est-à-dire la valeur des données représentées par les bits D2 à D9, le mot de qualification représenté par les bits DO et D1, selon l'état du signal de sélection de type d'usage. La variété des tests et des procédures de codage réalisables avec une telle configuration est alors obtenue, compte tenu du fait de l'utilisation de la mémoire programmable 1012.

On notera que les données d'entrée constituant chaque mot codé sur N bits, avec N=8, sont répétées dans le registre 1011, afin d'assurer un décalage de phase correct avec les données représentatives du mot de qualification, c'est-à-dire avec les données représentées par les bits de poids le plus faible DO et D1 délivrés par la mémoire 1012. Les données relatives au mot de qualification sont alors délivrées sous le contrôle des données d'entrée constituant le mot codé et de la sélection de type d'usage, désignée par stu. On notera que la sélection précitée peut être modifiée de manière statique ou dynamique. Ces modifications peuvent être corrélées au repère temporel des signaux vidéo tels que signaux relatifs à la parité de trame, à la suppression de trame ou à la suppression de ligne, par exemple.

Ainsi, l'utilisation pour la mémoire 1012 d'un circuit mémoire de 2K x 8 bits, avec une programmation adaptée et un signal de sélection de type d'usage, stu, codé sur 3 bits permet de réaliser les codages suivants pour les bits de poids le plus faible DO et D1 :

| Sélection | $D_1$ | $D_0$ |
|-----------|-------|-------|
| 0 | 0 | 0 |
| 1 | 1 | **PARG** |
| 2 | **PARB** | **PARH** |
| 3 | 0 | **PARG** |
| 4 | $D_8$ | $D_9$ |
| 5 | $\overline{D}_8$ | $\overline{D}_9$ |
| 6 | PARG | $\overline{D}_9$ |
| 7 | 1 | 1 |

Tableau 2

Avec $\quad$ **Di** $\quad$ = complément $D_i$

$\quad$ PARG $\quad$ = $[D_2 + D_3 + D_4 + D_5 + D_6 + D_7 + D_8 + D_9]$

$\quad$ **PARG** $\quad$ = complément PARG

$\quad$ **PARB** $\quad$ = complément $[D_2 + D_2 + D_4 + D_5]$

$\quad$ **PARH** $\quad$ = complément $[D_6 + D_7 + D_8 + D_9]$

On notera bien sûr que la mémoire 1012 peut être remplacée par un réseau logique programmable permettant de réaliser des traitements entre les données et le signal de sélection de type d'usage stu beaucoup plus élaborés.

Parmi le champs des possibilités de codage des bits de poids le plus faible DO et D1, le choix ci-après peut être retenu :

Tableau 3

| Sélection | $D_1$ | $D_0$ | Conditionnement |
|-----------|-------|-------|-----------------|
| 0 | 0 | 0 | sans |
| 1 | $D_7$ | $D_6$ | sans |
| 2 | 1 | 1 | sauf préambules où $D_1 = D_7$, $D_0 = D_6$ |
| 3 | 0 | 0 | sauf préambules et XY où $D_1 = 1$, $D_0 = 1$ |
| 4 | 1 | PARG | sauf préambules où $D_1 = D_7$, $D_0 = D_6$ |
| 5 | **PARG** | PARG | sauf préambules où $D_1 = D_7$, $D_0 = D_6$ |
| 6 | 1 | PARG | sauf préambules et XY où $D_1 = 0$, $D_0 = 0$ |
| 7 | 1 | 1 | sans |

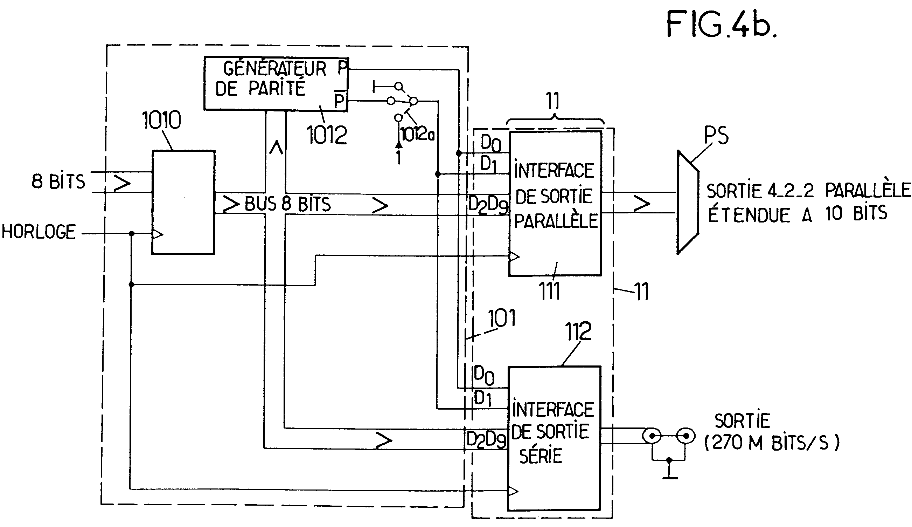

On notera enfin que dans un mode de réalisation particulièrement simple, tel que représenté en figure 4b, le circuit 1012 peut être constitué non plus par une mémoire, mais par un générateur de parité, le registre 1011 étant supprimé. Le générateur de parité 1012 reçoit sur un port d'entrée des données d'entrée, c'est-à-dire les bits de données D2 à D9, et délivre sur 2 ports de sortie un signal de parité, p, et son signal complémenté, $\overline{p}$, le signal de parité complémenté $\overline{p}$ étant délivré par l'intermédiaire d'un sélecteur à trois positions, 1012a. Le signal de parité p est attribué au bit de poids le plus faible DO, alors que le signal de parité complémenté, délivré par l'intermédiaire du sélecteur 1012a, est attribué au bit D1. On notera que le contrôle par parité des bits de poids le plus faible D0 et D1 ne nécessite que l'ajout d'un composant usuel de faible coût de génération de parité, lequel peut être de type classique.

On notera en outre que dans le cas de la figure 4b, le registre 110 du circuit 11 de concaténation du mot codé et du mot de qualification peut être supprimé. Le circuit 11 de concaténation, recevant, le mot codé représenté par les bits D2 à D9, délivré soit par le deuxième registre 1011 dans le cas de la figure 4a, soit par le premier registre 1010 dans le cas de la figure 4b, et d'autre part le mot de qualification codé sur M bits, les bits de poids le plus faible DO et D1, permet ainsi de délivrer en synchronisme avec le signal d'horloge Hr le mot qualifié codé sur 10 bits pour transmission par le port de sortie, PS. Le cas échéant, dans le cas de la figure 4b, par la sortie série par l'intermédiaire de l'interface de sortie série 112.

Suite à la transmission du mot qualifié par l'interface d'émission-réception IFER tel que représenté en figure 3a, le système de transmission d'un signal numérique codé par mots sur N bits par une interface d'émission-réception M+N bits comprend, à la réception, c'est-à-dire en aval de l'interface d'émission-réception IFER délivrant le mot qualifié transmis, un circuit 2 de décodage, lequel comprend successivement, ainsi que représenté sur la figure 3a précitée, outre un port d'entrée parallèle, PE, suite à désérialisation du signal par le désérialisateur de l'interface d'émission-réception IFER, un circuit 20 de discrimination, dans le mot qualifié transmis, du mot codé transmis MCTk, codé sur N bits, D9 à D2, et du mot de qualification transmis MQTk, codé sur M bits, DO, D1. Ce circuit 20 de discrimination est suivi d'un circuit 21 de codage d'un mot de qualification de contrôle MQCk formé par codage selon la loi de codage déterminée précitée, par corrélation avec la valeur du mot codé transmis, le circuit 21 de codage permettant en outre d'assurer la diffusion contrôlée du mot codé transmis, suite à une comparaison de la corrélation du mot codé et du mot de qualification à l'émission avec la corrélation du mot codé transmis et du mot de qualification de contrôle sur critère de qualité suite à cette comparaison.

Bien entendu, le circuit 21 de codage et de diffusion contrôlée du mot codé transmis est suivi d'un circuit 22, interface de sortie parallèle synchronisé par le signal d'horloge Hr, lequel permet, par l'intermédiaire d'un port de sortie parallèle de type 4-2-2 8 bits, de délivrer le signal représentatif du mot codé après traitement.

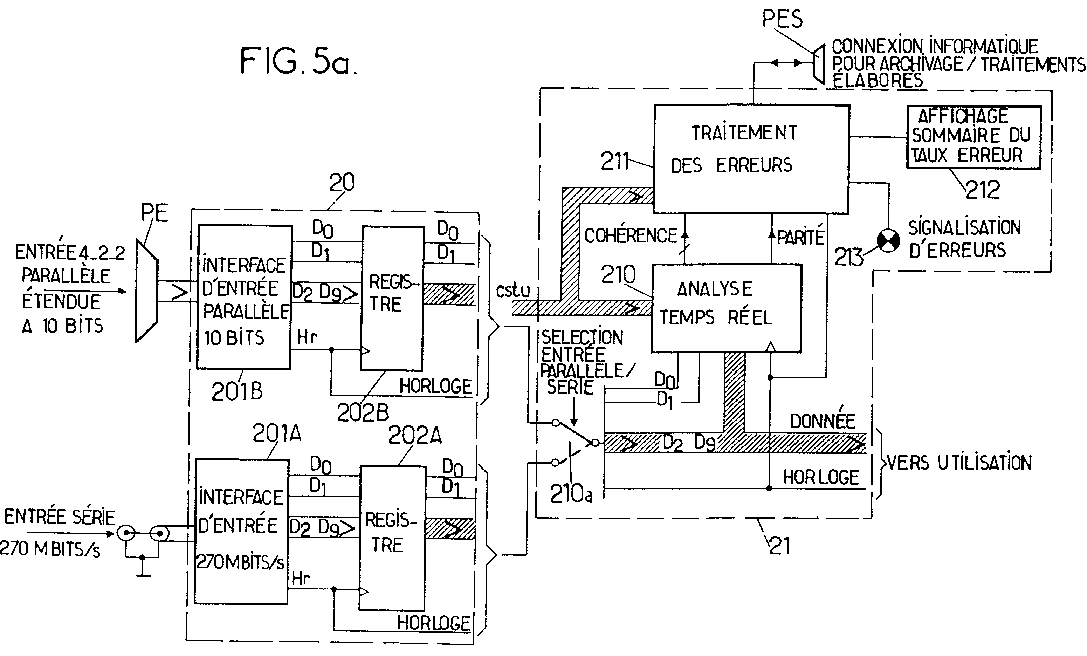

Une description plus détaillée du circuit 20 de discrimination et 21 de codage et de diffusion contrôlée sera maintenant donnée en liaison avec la figure 5a.

Selon la figure précitée, ainsi qu'on pourra l'observer, le circuit 20 de discrimination dans le mot qualifié transmis du mot codé MCTk et du mot de qualification MQTk peut comporter, avantageusement, un circuit d'interface série-parallèle, noté 201a, et un circuit d'interface parallèle/ parallèle 201b, permettant de séparer les N bits de poids fort, D9-D2, et les M bits de poids faible, DO, D1.

A chaque circuit d'interface série/parallèle ou parallèle/parallèle est associé un registre tampon 202a, 202b respectivement, chaque registre tampon étant destiné à assurer la mémorisation temporaire des N+M bits sous forme séparée, ainsi que l'accès aux N bits de poids fort D9-D2 et aux M bits de poids faible, DO, D1. Les circuits précités d'interface d'entrée parallèle/parallèle et d'interface d'entrée série/parallèle et leurs registres associés sont des circuits connus de l'homme de métier et, en tant que tels, ne seront pas décrits plus en détails.

Ainsi qu'on le notera également sur la figure 5a, le circuit 21 de codage et de diffusion contrôlée comporte avantageusement un circuit 210 de type mémoire programmable interconnecté en sortie de l'un ou l'autre des registres tampons 202a, 202b, par l'intermédiaire d'un interrupteur de sélection entrée parallèle/série, noté 210a.

Le circuit 210 de mémoire programmable est interconnecté en sortie de l'un des registres tampon et reçoit sur une entrée de lecture une commande de sélection de type d'usage, cstu, et permet de délivrer le mot de qualification de contrôle MQCk.

En outre, le circuit 21 de codage d'un mot de qualification de contrôle et de diffusion contrôlée du mot codé transmis comprend également un circuit 211 de contrôle des erreurs et un circuit 212,213 d'affichage des erreurs ou de signalisation de celles-ci. Un port d'entrée-sortie parallèle, noté PES, permet, le cas échéant, une interconnection du circuit 211 de contrôle des erreurs vers un calculateur ou une ressource informatique pour archivage/ traitement élaboré des erreurs précitées.

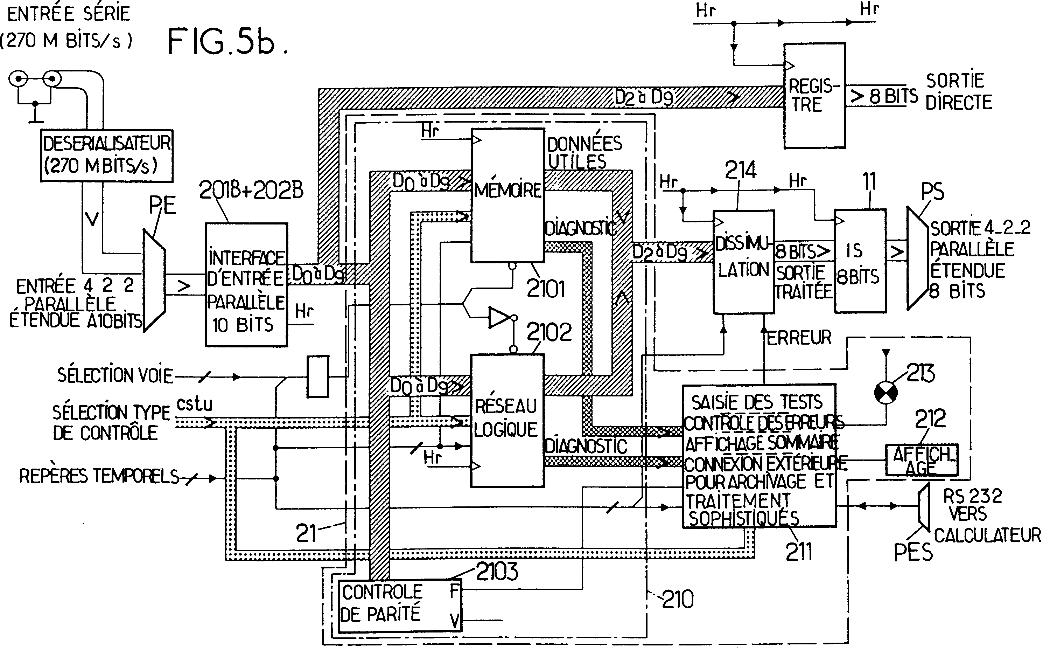

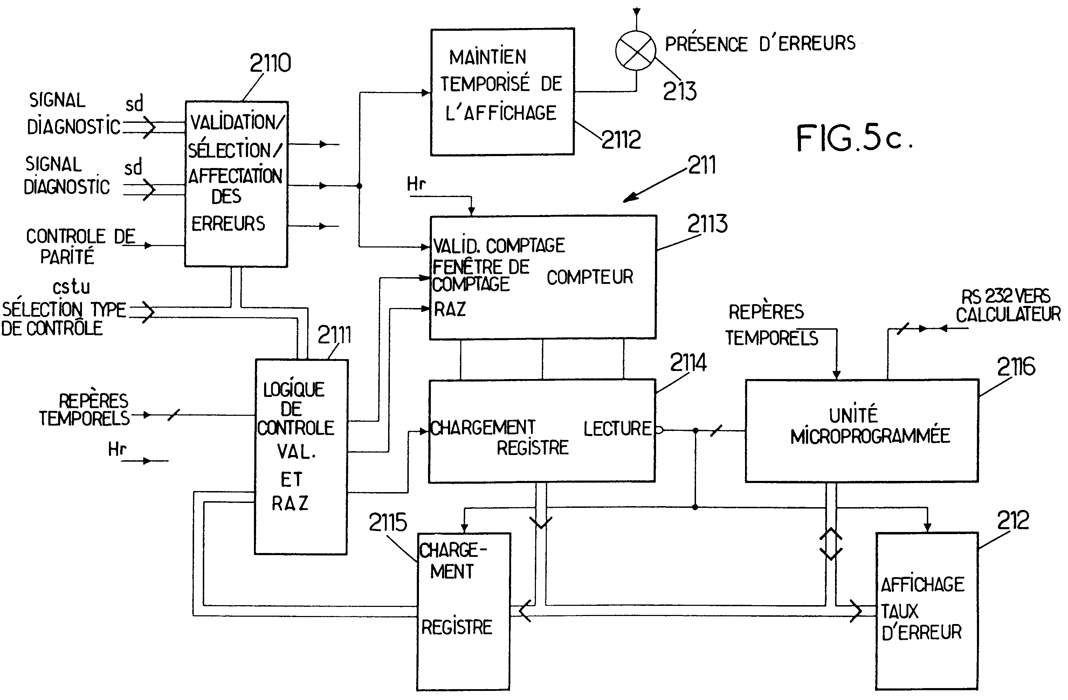

Une description plus détaillée des différents éléments consitutifs du circuit 21 de codage et de diffusion contrôlée du mot codé transmis MCTk représenté en figure 5a sera donnée en liaison avec les figures 5b et 5c.

Ainsi que représenté sur la figure 5b précitée, le circuit 210 de type mémoire programmable peut comprendre avantageusement un circuit mémoire 2101, un réseau logique 2102, et un circuit 2103 de contrôle de parité. Le circuit mémoire 2101, et le réseau logique 2102 reçoivent les valeurs de données, c'est-à-dire les bits D2 à D9 du mot codé transmis mais également le mot de qualification constitué par les bits de poids le plus faible, DO, D1. Cette liaison est bien entendu réalisée par une liaison par bus unique. Le circuit mémoire 2101 et le réseau logique 2102 reçoivent également les signaux de repère temporel, les signaux d'horloge Hr, les signaux de repère temporel correspondant aux signaux de repère temporel d'une ligne d'image dans un signal de télévision. Les états de ces signaux d'entrée permettent, sur la base de la connaissance des sélections de codage qui sont intervenues à l'émission, de fournir en sortie, outre le signal codé transmis, des informations brutes sur les altérations constatées sur ces données, suite à une fonction diagnostic. En outre, le circuit de contrôle de parité 2103 permet d'assurer un contrôle de parité des données reçues. On rappelle que, dans le cas du codage des bits de poids le plus faible par l'intermédiaire du seul critère de parité, le circuit mémoire 2101 et le circuit réseau logique 2102 peuvent être supprimés, de manière analogue au cas de la figure 4b. On rappelle que dans ce cas, le circuit mémoire 2101 et le réseau logique 2102 peuvent alors être remplacés par un câblage direct entre le circuit de discrimination 20 de la figure 5a représenté par les circuits interface d'entrée parallèle 201b et interface d'entrée série 201a, à titre de simplification sur la figure 5b. On rappelle que le codage est, dans ce cas, celui décrit en figure 4b.

En ce qui concerne le circuit 211 de contrôle des erreurs, on rappelle que celui-ci assure 3 fonctions :
- validation, sélection et affectation des erreurs à un type d'archivage et de traitement déterminé ;
- traitement utile à l'exploitation des résultats, contrôle des erreurs, affichage sommaire, par l'intermédiaire des circuits d'affichage des erreurs 212, 213 précédemment mentionnés ;
- connexion à un calculateur extérieur par l'intermédiaire du port d'entrée-sortie PES qui peut être constitué par une liaison série RS 232.

Un mode de réalisation donné à titre d'exemple non limitatif du circuit 211 de contrôle des erreurs représenté en figure 5b sera maintenant donné en relation avec la figure 5c.

Ainsi que représenté sur la figure précitée, le circuit 211 de contrôle des erreurs comporte avantageusement un circuit 2110 de validation-sélection-affectation des erreurs recevant un premier et un deuxième signal diagnostic sd délivrés par le circuit mémoire 2101, respectivement le réseau logique 2102, et permet d'assurer toutes les opérations destinées à affecter aux éléments de traitement les informations qui leur sont destinées. Ces affectations dépendent de la sélection du type du contrôle qui doit correspondre au type de codage des bits de poids le plus faible DO et D1 prévus.

Le circuit 211 comporte également un circuit logique de contrôle des valeurs temporelles, c'est-à-dire des repères temporels et du signal d'horloge Hr, un circuit 2112 de maintien temporisé de l'affichage, lequel permet de commander un voyant 213 de présence d'erreur, le circuit 2112 étant commandé par le circuit 2110 de validation sélection-affectation des erreurs.

En outre, un compteur-décompteur 2113 est prévu, lequel reçoit, ainsi que le circuit 2110 de maintien temporisé de l'affichage, un signal de validation de comptage, lequel est délivré par le circuit 2110 précité, un signal de commande de fenêtre de comptage délivré par le circuit logique de contrôle 2111, un signal de remise à zéro, RAZ, délivré par ce même dernier circuit.

En outre, un registre 2114 est prévu, lequel permet de recevoir, d'une part, les résultats de comptage délivrés par le compteur décompteur 2113, le registre 2114 recevant un signal de commande de chargement délivré par le circuit logique de contrôle 2111. Une unité microprogrammée 2116 est prévue, laquelle permet, à partir des signaux de repère temporels, d'assurer, d'une part, le chargement du résultat de comptage dans un registre complémentaire 2115 et l'affichage du taux d'erreur sur un afficheur 212 tel que par exemple un afficheur à 16 segments. On notera que le registre supplémentaire 2115 est en outre rebouclé sur le circuit logique de contrôle 2111, afin d'assurer une remise à zéro d'un processus de calcul du taux d'erreurs sur un nombre déterminé d'images, ainsi que précédemment décrit dans la description.

On comprend en effet que les éléments 2111 à 2116 représentés en figure 5c permettent de compter les erreurs dans des intervalles de temps choisis. La configuration matérielle, telle que représentée en figure 5c, permet de réaliser l'ensemble des actions déterminées par des événements temps réel sous le contrôle des ordres issus de l'unité microprogrammée 2116. On notera que l'unité microprogrammée 2116 peut être reliée au port PES d'entrée-sortie série représentée en figure 5b.

A titre d'exemple de traitement des erreurs, on donnera simplement les éléments ci-après : le taux d'erreur peut être calculé sur les images utiles, c'est-à-dire les données vidéo de celles-ci de 10 images consécutives selon la séquence ci-après :
- phase 1 :sélection de l'autorisation de comptage en image utile, cette sélection étant réalisée au moyen d'un clavier non représenté, lequel permet d'engendrer le signal sélection type de contrôle, cstu ;
- phase 2 :remise à zéro du compteur 2113 ;
- phase 3 :attente d'un début d'image ;
- phase 4 :validation de la fenêtre de comptage en image utile ;
- phase 5 :comptage de 10 images ;
- phase 6 :transfert du compte dans le registre ;
- phase 7 :lecture du registre 2114 ;
- phase 8 : étape conjointe consistant à relancer par exemple à la phase 2 précédente, et calcul du rapport du nombre d'erreurs/nombre d'échantillons pour 10 images utiles, puis transfert de ce calcul, c'est-à-dire du taux d'erreurs, à l'affichage, par l'intermédiaire de l'afficheur 212.

On comprendra que dans le mode de réalisation du système objet de la présente invention tel que représenté en figure 5b, le signal reçu, c'est-à-dire le signal délivré par le circuit de discrimination 20, est utilisable en 8 bits plus signal d'horloge sans autre traitement que l'élimination des bits de poids le plus faible DO et D1. Toutefois, l'identification des erreurs peut permettre, conformément au procédé et au système objets de la présente invention, de disposer en sortie traitée de signaux sur lesquels différents traitements peuvent être effectués de manière particulièrement avantageuse.

Parmi ces traitements et conformément à un aspect remaquable du procédé et du système objets de la présente invention, une dissimulation des erreurs peut ainsi être réalisée.

Ainsi, le procédé ou le système d'un signal numérique de télévision objet de la présente invention peut-il être utilisé pour effectuer une dissimulation d'erreurs induites par le processus de transmission.

La dissimulation proprement dite des erreurs conformément à un aspect remarquable du procédé objet de la présente invention repose sur le principe de la cohérence spatio-temporelle des images.

Ainsi, sur réponse positive au critère de qualité, lequel peut consister en la comparaison du mot de qualification transmis MQTk et du mot de qualification de contrôle MQCk, tout mot codé transmis MCTk reçu d'ordre k est utilisé vers un sous-ensemble aval d'utilisation sans changement aucun, alors qu'au contraire, sur réponse négative à ce critère de qualité, à chaque mot codé transmis reçu d'ordre k est substitué le mot codé transmis reçu antérieur d'ordre k-p, avec p > 1, pour lequel une réponse positive au critère de qualité a été obtenue. Dans un mode de réalisation simple, pour p = 1, la donnée erronée est simplement remplacée par celle de même type, c'est-à-dire la donnée de luminance Y ou la donnée de différence de couleur, $C_R$ ou $C_B$, qui la précède dans le multiplex vidéo-numérique des données d'images.

Un tel type de traitement de dissimulation d'erreurs peut alors être inhibé pour les données du multiplex vidéo-numérique non représentatives du codage d'échantillons du signal vidéo. Conformément aux dispositions de la recommandation 656 du C.C.I.R., les données de référence temporelle, prédictibles, donc traitables en amont, et les données présentes dans les lignes de suppression trame et dans les suppressions de lignes vidéo peuvent alors être écartées de ce traitement.

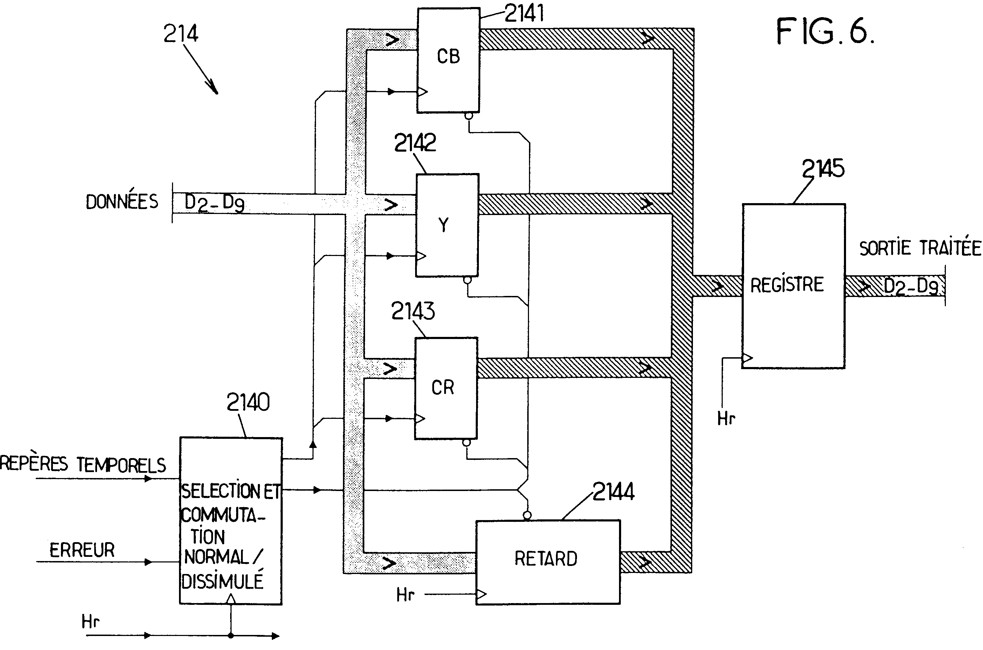

Un mode de réalisation non limitatif d'un circuit de dissimulation d'erreurs 214 particulièrement avantageux est donné en figure 6.

Selon la figure précitée, ce circuit peut comprendre un premier circuit logique 2140 de sélection et de commutation transmission normale/dissimulation, ce circuit 2140 recevant les signaux de repère temporel, un signal de commande présence erreur, délivré par exemple par l'unité microprogrammée 2116 de la figure 5c, ainsi que le signal d'horloge Hr.

Il comporte en outre trois modules de mémorisation d'une pluralité d'échantillons successifs des signaux de données, un module 2141 permettant de mémoriser les signaux d'échantillons de composante de couleur CB, un module 2142 de mémorisation des échantillons des signaux de luminance Y, et un module de mémorisation 2143 permettant de mémoriser les signaux ou échantillons de composante de couleur $C_R$ sur un nombre successif déterminé d'échantillons. Des modules mémoire précités sont bien entendu interconnectés au bus de données délivrant les informations de données, c'est-à-dire les bits de poids le plus élevé D2 à D9.

En outre, un circuit de retard 2144 reçoit également les informations de données, c'est-à-dire les bits de poids le plus élevé D2 à D9, et permet d'apporter un retard correspondant au retard apporté par une opération de mémorisation/lecture des échantillons dans chacun des circuits mémoire 2141 à 2143, ce qui permet, soit en présence d'une substitution d'un échantillon siège d'une erreur, soit en l'absence d'une telle substitution, c'est-à-dire lors de la transmission d'un échantillon effectivement reçu, avec au plus un retard de quelques périodes d'horloge, de reconstituer le signal non traité en l'absence d'erreurs, ou le signal traité dans lequel les échantillons erronés ont été substitués, au moyen d'un registre 2145 recevant les signaux délivrés, à la fois par les circuits mémoire 2141 à 2143, et par le circuit de retard 2144. Le circuit registre 2145 permet ainsi de délivrer, soit le signal traité où l'erreur a été dissimulée, soit le signal non traité en l'absence d'erreur.

On a ainsi décrit un procédé et un système de transmission d'un signal numérique codé sur N bits au moyen d'une interface d'émission-réception de signaux codés sur N+M bits particulièrement performants, notamment pour la transmission de signaux de télévision numérique, dans la mesure où, outre une surveillance de la qualité de transmission correspondante, une correction par dissimulation d'erreurs des données transmises peut être effectuée, cette qualité de transmission pouvant en outre être améliorée par le contrôle des séquences de données effectivement transmises au cours du processus de transmission correspondant.

En outre, le procédé et le système selon l'invention sont particulièrement avantageux dans la mesure où, vis-à-vis des processus ou systèmes de l'art antérieur, une compabilité totale et sans défaut de transmission et d'enregistrement des signaux est conservée, dans le contexte de la transmission des signaux codés sur 8 bits, ou, le cas échéant, une compatibilité globale est maintenue, étant entendu que seule une erreur de représentation du signal, au maximum égale à 0,3 % sur 1024 niveaux de gris eut être introduite, dans le cas d'un contexte de transmission directe de signaux de télévision numérique codés sur 8 bits sur une interface 10 bits.

## Revendications

1) Procédé de transmission d'un signal numérique codé par mots sur N bits par une interface d'émission-réception N+M bits, consistant à l'émission, en amont de ladite interface, à associer à chaque mot codé, formant ledit signal numérique, un mot de qualification, codé au plus sur M bits, ledit mot de qualification étant formé, par codage selon une loi de codage déterminée, par corrélation avec la valeur du mot codé et constituant avec ledit mot codé un mot qualifié, caractérisé en ce que dans le cas d'une transmission par l'intermédiaire d'une interface d'émission-réception série, ledit signal numérique étant sérialisé préalablement à la transmission, ledit mot de qualification est formé par affectation des M bits de poids faible, le bit (DO) de poids le plus faible étant codé selon une fonction de la valeur des N bits du mot codé et les M-1 autres bits (D1) de poids faible étant affectés à une valeur déterminée, ledit procédé consistant à transmettre par l'intermédiaire de ladite interface d'émission-réception chaque mot qualifié, ce qui permet d'assurer à la réception, en aval de ladite interface, une amélioration de la fiabilité de la transmission, et d'améliorer la robustesse et les performances de la transmission série.

2) Procédé de transmission d'un signal numérique codé par mots sur N bits par une interface d'émission-réception N+M bits, consistant à l'émission, en amont de ladite interface, à associer à chaque mot codé, formant ledit signal numérique, un mot de qualification, codé au plus sur M bits, ledit mot de qualification étant formé, par codage selon une loi de codage déterminée, par corrélation avec la valeur du mot codé et constituant avec ledit mot codé un mot qualifié, caractérisé en ce que dans le cas d'une transmission par l'intermédiaire d'une interface d'émission-réception parallèle, ledit mot de qualification est formé par affectation des M bits de poids le plus faible, le bit de poids le plus faible (DO) étant affecté à une valeur de contrôle, fonction de la valeur des N bits de poids fort du mot codé, et les autres M-1 bits de poids faible étant affectés à une valeur déterminée, ledit procédé consistant à transmettre par l'intermédiaire de ladite interface d'émission-réception chaque mot qualifié, ce qui permet d'assurer à la réception, en aval de ladite interface, une amélioration de la fiabilité de la transmission.

3) Procédé selon la revendication 1, caractérisé en ce que le bit (DO) de poids le plus faible est affecté à la valeur du complément de l'un des N bits de poids fort ou à la valeur du complément des M-1 autres bits de poids faible.

4) Procédé selon la revendication 1, caractérisé en ce que celui-ci consiste à affecter les bits de poids faible à une valeur déterminée, de façon à interdire la génération de séquences de bits critiques pour la transmission série.

5) Procédé selon la revendication 4, caractérisé en ce que l'affectation est effectuée compte tenu d'un processus d'embrouillage appliqué au cours de la sérialisation.

6) Procédé de transmission d'un signal numérique codé selon l'une des revendications 1 à 3, caractérisé en ce que dans le cas d'un signal de télévision numérique codé sur 8 bits, N=8, ledit mot de qualification est codé sur, au plus, M=2 bits.

7) Procédé de transmission d'un signal numérique codé selon l'une des revendications précédentes, caractérisé en ce que celui-ci consiste, à la réception, en aval de ladite interface d'émission-réception,
- à discriminer dans ledit mot qualifié transmis le mot codé transmis et le mot de qualification transmis,
- à établir par codage, selon ladite loi de codage déterminée un mot de qualification de contrôle par corrélation avec la valeur du mot codé transmis,
- à effectuer une comparaison de la corrélation dudit mot codé et du mot de qualification à l'émission avec la corrélation dudit mot codé transmis et du mot de qualification transmis à la réception,
- à effectuer une diffusion contrôlée dudit mot codé transmis sur critère de qualité à partir de ladite comparaison.

8) Procédé selon la revendication 7, caractérisé en ce que, dans le cas d'un signal de télévision numérique, ladite diffusion contrôlée dudit mot codé transmis sur critère de qualité à partir de ladite comparaison est effectuée sur un nombre K d'images utiles, de façon à déterminer un taux d'erreur correspondant, ce taux d'erreur étant défini comme le rapport du nombre d'erreurs détectées, suite à la comparaison des corrélations, au nombre de mots codés constitutifs des K images considérées.

9) Procédé selon l'une des revendications 2 à 8 précédentes, caractérisé en ce que, dans le cas d'un signal de télévision numérique, celui-ci consiste tant à l'émission qu'à la réception :
- à effectuer une discrimination et une reconnaissance de la nature de l'information transmise par chaque mot codé,
- à effectuer une sélection, en fonction de la nature de l'information ainsi discriminée, de la loi de codage par corrélation avec la valeur du mot codé, ce qui permet d'améliorer la mesure de qualité de la transmission.

**10)** Système de transmission d'un signal numérique codé par mots sur N bits par une interface d'émission-réception N + M bits, caractérisé en ce qu'il comprend, à l'émission, en amont de ladite interface d'émission-réception d'un signal numérique codé, un circuit de codage comprenant :

- des moyens (10) de codage d'un mot de qualification, codé sur au plus M bits, ledit mot de qualification étant formé par codage selon une loi de codage déterminée par corrélation avec la valeur du mot codé, lesdits moyens (10) de codage comprenant successivement
  . un circuit (100) d'interface d'entrée permettant de séparer, d'une part, les N bits de poids fort (D9 à D2) des M bits de poids faible (DO, D1) ainsi que le signal d'horloge,
  . un circuit (101), générateur de codage par affectation des M bits de poids faible, et
- des moyens (11) de concaténation dudit mot codé et dudit mot de qualification pour former un mot qualifié, délivré à ladite interface d'émission-réception pour transmission.

**11)** Système de transmission d'un signal numérique selon la revendication 10, caractérisé en ce que ledit circuit (101) générateur de codage par affectation des M bits de poids faible comprend, interconnecté en cascade audit circuit d'interface d'entrée,

- un premier (1010) registre tampon destiné à assurer la mémorisation temporaire des N bits de poids élevé (D2 à D9),
- un deuxième (1011) registre tampon, interconnecté en sortie du premier registre tampon, et destiné à assurer un retard de transmission d'une période d'horloge desdits N bits de poids fort D2 à D9 formant le mot codé,
- une mémoire (1012) de type mémoire programmable, interconnectée en sortie du premier registre tampon, ladite mémoire de type mémoire programmable recevant sur une entrée de lecture une commande de sélection de type d'usage et délivrant le mot de qualification codé sur M bits (D0, D1).

**12)** Système de transmission d'un signal numérique selon la revendication 10, caractérisé en ce que lesdits moyens (11) de concaténation du mot codé et du mot de qualification comprennent un registre tampon (110) recevant, d'une part, le mot codé (D9 à D2) délivré par ledit deuxième registre tampon (1011) et, d'autre part, ledit mot de qualification codé sur M bits (DO, D1) pour délivrer, en synchronisme avec le signal d'horloge, ledit mot qualifié pour transmission.

**13)** Système de transmission d'un signal numérique codé selon l'une des revendications 10 à 12, caractérisé en ce qu'il comprend à la réception, en aval de ladite interface d'émission-réception délivrant ledit mot qualifié transmis, formé dudit mot codé et dudit mot de qualification transmis, un circuit (2) de décodage comprenant :

- des moyens (20) de discrimination, dans ledit mot qualifié transmis dudit mot codé sur N bits (D9 à D2) et dudit mot de qualification codé sur M bits (DO, D1) transmis,
- des moyens (21) de codage d'un mot de qualification de contrôle, formé par codage selon ladite loi de codage déterminée par corrélation avec la valeur du mot codé transmis, et de diffusion contrôlée dudit mot codé transmis suite à une comparaison de la corrélation du mot codé et du mot de qualification à l'émission avec la corrélation du mot codé transmis et du mot de qualification de contrôle, sur critère de qualité suite à ladite comparaison.

**14)** Système de transmission d'un signal numérique codé selon la revendication 13, caractérisé en ce que lesdits moyens (20) de discrimination, dans le mot qualifié transmis du mot codé et du mot de qualification, comportent:

- un circuit d'interface série/parallèle (201 A) ou parallèle/parallèle (201 B), permettant de séparer lesdits N bits de poids fort (D9-D2) et les M bits de poids faible (DO, D1),
- un registre tampon (202A, 202B) destiné à assurer la mémorisation temporaire des N+M bits, sous forme séparés et l'accès auxdits N bits de poids fort (D9-D2) et M bits de poids faible (DO, D1).

**15)** Système de transmission d'un signal 5numérique codé selon la revendication 13, caractérisé en ce que lesdits moyens (21) de codage d'un mot de qualification de contrôle et de diffusion contrôlée comprennent : un circuit (210) de type mémoire programmable, interconnecté en sortie dudit registre tampon, et recevant sur une entrée de lecture une commande de sélection de type d'usage (cstu) et délivrant ledit mot de qualification de contrôle.

**16)** Système de transmission d'un signal numérique codé selon la revendication 13, caractérisé en ce que lesdits moyens (21) de codage d'un mot de qualification de contrôle et de diffusion contrôlée dudit mot codé transmis suite à une comparaison de la corrélation du mot codé et du mot de qualification à l'émission, avec la corrélation du mot codé transmis et du mot de qualification de contrôle, sur critère de qualité suite à ladite comparaison comprennent au moins :

- un circuit (211) de contrôle des erreurs,

- un circuit (212, 213) d'affichage des erreurs.

**17)** Utilisation du procédé ou du système de transmission d'un signal numérique de télévision selon l'une des revendications 2 à 16, pour la dissimulation d'erreurs induites par le processus de transmission.

**18)** Utilisation selon la revendication 17, caractérisée en ce que, sur réponse positive audit critère de qualité, tout mot codé transmis reçu d'ordre k est diffusé vers un sous-ensemble aval d'utilisation et en ce que sur réponse négative audit critère de qualité, à chaque mot codé transmis reçu d'ordre k est substitué le mot codé transmis reçu antérieur d'ordre k-p, avec p > 1, pour lequel une réponse positive audit critère de qualité a été obtenue.

FIG.1a.

MOT CODÉ D'ORDRE k MCk

N BITS

M+N BITS

TRANS-MISSION

MOT QUALIFIÉ D'ORDRE k

NBITS

[FC]

MOT DE QUALIFICATION D'ORDRE k MQk

FIG.1b.

$D_9 D_8 D_7 D_6 D_5 D_4 D_3 D_2 D_1 D_0$

TRANSMISSION SÉRIE

MCk MOT CODÉ D'ORDRE k

MQk MOT DE QUALIFICATION D'ORDRE k

[FC]

$$FC \begin{cases} D_0 = [\overline{D_9} \text{ ou} \overline{D_8} \text{ ou} \overline{D_7} \text{ ou} \overline{D_6} \text{ ou} \\ \quad \overline{D_5} \text{ ou} \overline{D_4} \text{ ou} \overline{D_3} \text{ ou} \overline{D_2}] \\ D_1 = 0 \end{cases}$$

FIG.1c.

$D_9 D_8 D_7 D_6 D_5 D_4 D_3 D_2 D_1 D_0$

TRANSMISSION PARALLÈLE

MCk MOT CODÉ D'ORDRE k

MQk MOT DE QUALIFICATION D'ORDRE k

[FC]

$$FC \begin{cases} D_0 = f(D_9, D_8, D_7, D_6, D_5, D_4 \\ \quad\quad\quad D_3, D_2) \\ D_1 = 0 \end{cases}$$

M+N BITS   MOT QUALIFIÉ TRANSMIS.

FIG.2a.

N BITS            M BITS

MOT CODÉ TRANSMIS        MOT DE QUALIFICATION
D'ORDRE k               TRANSMIS D'ORDRE k
MCT k                   MQT k

C C    DIFFUSION CONTROLÉE
       DU MOT CODE TRANSMIS
       MCT k

F C

M BITS

MOT DE QUALIFICATION
DE CONTROLE D'ORDRE k
MQC k

2000    CHOIX DU NOMBRE
        D'IMAGES K

FIG.2b. PROCÉDURE
RELATIVE AU SIGNAL VIDÉO

2002    k < K          COMPARAISON FIG.2a.
                       MQTk , MCTk          2001

                                    DIFFUSSION CONTROLE
                                    MCT k

2004    TAUX D'ERREUR              2003

RECONNAISSANCE.
NATURE INFORMATION        3000
MCk ou MCTk

FIG.2c.

3001
+    MCk
     ou    =VIDÉO    —
     MCTk

3002    PROCÉDURE
        RELATIVE AU
        SIGNAL VIDÉO
        FIG.2 b.

3003    PROCÉDURE
        DE RÉFÉRENCE
        D'ERREUR

AMÉLIORATION MESURE
QUALITÉ TRANSMISSION        3004

18

EP 0 569 280 A1

SELECTION — 10

**ENTRÉE 4-2-2 PARALLÈLE ( 8 BiTS)** → PE >

INTERFACE D'ENTRÉE (10 BiTS)

$D_2 - D_9$ >
Hr

DISPOSITIF DE GÉNÉRATION DU TEST ET CODAGE DE $D_0$ ET $D_1$

101

$D_2 - D_9$ >
$D_0 - D_1$ >
Hr

11

INTERFACE DE SORTIE (10 BiTS)

> PS

**SORTIE 4-2-2 PARALLÈLE ÉTENDUE (10 BiTS)**

1    100

IFER

SÉRIALISATEUR

CABLE COAXIAL

DÉSÉRIALISATEUR

## FIG.3a.

**ENTRÉE 4-2-2 PARALLÈLE ( 10 BiTS )** → PE >

INTERFACE D'ENTRÉE (10 BiTS)

$D_0 - D_1$ >
$D_2 - D_9$ >
Hr

DISPOSITIF CODAGE ET DE CONTROLE D'ERREUR EN ASSOCIATION AVEC LES BiTS $D_0$ ET $D_1$

$D_2 - D_9$ >
Hr

22

INTERFACE DE SORTIE (8 BiTS)

> PS

**SORTIE 4-2-2 PARALLÈLE (8 BiTS )**

2    20

SELECTION    21

19

FIG.3b.

ENTRÉE
PARALLÈLE

ENTRÉE
SÉRIE

PE

DÉSÉRIALISEUR

100a

INTERFACE
D'ENTRÉE
PARALLÈLE

27M MOTS/s

$D_0$
$D_1$

100c

REGISTRE

DONNÉE
$D_2$-$D_9$

Hr HORLOGE

PS

ENTRÉE
SÉRIE

100b

INTERFACE
D'ENTRÉE
SÉRIE

270M BITS/s

$D_0$
$D_1$

100d

REGISTRE

DONNÉE
$D_2$-$D_9$

Hr HORLOGE

100

SELECTION ENTRÉE
PARALLÈLE/SÉRIE

100e

DONNÉES

HORLOGE

EP 0 569 280 A1

FIG.3c.

EP 0 569 280 A1

FIG.4a.

FIG.4b.

GÉNÉRATEUR P DE PARITÉ

$\overline{P}$

1012a

1010

8 BITS

HORLOGE

BUS 8 BITS

$D_0$
$D_1$
$D_2D_9$

11

INTERFACE DE SORTIE PARALLÈLE

111

101

PS

SORTIE 4-2-2 PARALLÈLE ÉTENDUE A 10 BITS

11

112

$D_0$
$D_1$
$D_2D_9$

INTERFACE DE SORTIE SÉRIE

SORTIE (270 M BITS/S)

EP 0 569 280 A1

# FIG. 5a.

PES

CONNEXION INFORMATIQUE
POUR ARCHIVAGE / TRAITEMENTS
ÉLABORÉS

TRAITEMENT DES ERREURS

211

AFFICHAGE SOMMAIRE DU TAUX ERREUR

212

COHÉRENCE

210

PARITÉ

213

SIGNALISATION D'ERREURS

20

PE

ENTRÉE 4-2-2 PARALLÈLE ÉTENDUE A 10 BITS

INTERFACE D'ENTRÉE PARALLÈLE 10 BITS

$D_0$
$D_1$
$D_2$ $D_9$
Hr

REGIS-TRE

$D_0$
$D_1$

201B

202B

HORLOGE

cst.u

ANALYSE TEMPS RÉEL

SELECTION ENTRÉE PARALLÈLE/SÉRIE

$D_0$
$D_1$

DONNÉE

VERS UTILISATION

201A

202A

INTERFACE D'ENTRÉE 270MBITS/s

$D_0$
$D_1$
$D_2$ $D_9$
Hr

REGIS-TRE

$D_0$
$D_1$

$D_2$ $D_9$

HORLOGE

ENTRÉE SÉRIE 270 MBITS/s

210a

21

HORLOGE

EP 0 569 280 A1

FIG.5b.

ENTRÉE SÉRIE (270 M BITS/s)

DESERIALISATEUR (270 MBITS/s)

ENTRÉE 4 2 2 PARALLÈLE ÉTENDUE A10BITS

201B+202B

INTERFACE D'ENTRÉE PARALLÈLE 10 BITS

SÉLECTION VOIE

SÉLECTION TYPE DE CONTRÔLE  cstu

REPÈRES TEMPORELS

MÉMOIRE  DONNÉES UTILES  DIAGNOSTIC  2101

RÉSEAU LOGIQUE  DIAGNOSTIC  2102

CONTROLE DE PARITÉ  2103

D2 à D9  REGIS-TRE  > 8 BITS  SORTIE DIRECTE

214  DISSIMU-LATION  D2 à D9  8 BITS>  SORTIE TRAITÉE  IS 8BITS  11  PS  SORTIE 4-2-2 PARALLÈLE ÉTENDUE 8 BITS

ERREUR

SAISIE DES TESTS CONTRÔLE DES ERREURS AFFICHAGE SOMMAIRE CONNEXION EXTÉRIEURE POUR ARCHIVAGE ET TRAITEMENT SOPHISTIQUÉS  211

213  212  AFFICH. AGE  RS 232 VERS CALCULATEUR  PES

21  210

EP 0 569 280 A1

FIG.5c.

SIGNAL DIAGNOSTIC — sd → VALIDATION/ SÉLECTION/ AFFECTATION DES ERREURS (2110)

SIGNAL DIAGNOSTIC — sd →

CONTROLE DE PARITÉ →

cstu SÉLECTION TYPE DE CONTRÔLE →

REPÈRES TEMPORELS →

Hr →

LOGIQUE DE CONTROLE VAL. ET RAZ (2111)

MAINTIEN TEMPORISÉ DE L'AFFICHAGE (2112)

PRÉSENCE D'ERREURS (213)

Hr

VALID. COMPTAGE FENÊTRE DE COMPTAGE COMPTEUR RAZ (2113) (211)

CHARGEMENT REGISTRE LECTURE (2114)

CHARGE- MENT REGISTRE (2115)

REPÈRES TEMPORELS

RS 232 VERS CALCULATEUR

UNITÉ MICROPROGRAMMÉE (2116)

AFFICHAGE TAUX D'ERREUR (212)

EP 0 569 280 A1

FIG.6.

DONNÉES $D_2-D_9$

REPÈRES TEMPORELS

ERREUR

Hr

214

2140 SELECTION ET COMMUTA-TION NORMAL / DISSIMULÉ

2141 CB

2142 Y

2143 CR

2144 RETARD

Hr

2145 REGISTRE

SORTIE TRAITÉE $D_2-D_9$

Hr

EP 0 569 280 A1

**Office européen des brevets**

# RAPPORT DE RECHERCHE EUROPEENNE

Numero de la demande

EP 93 40 1139

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 204 296 (CSELT) <br> * page 3, ligne 15 - ligne 19 * <br> --- | 1,2,10 | H04L1/00 |
| X | EP-A-0 039 565 (SONY) <br> * revendications; figures 1-6 * <br> --- | 1,2,10 | |
| X | GB-A-2 116 403 (BBC) <br> * abrégé; figure 1B * <br> --- | 1,2,9 | |
| A | WO-A-8 201 094 (WESTERN ELECTRIC COMPANY) <br> * page 12, ligne 31 - page 13, ligne 24; figure 7 * <br> --- | 7 | |
| A | EP-A-0 081 387 (SONY CORPORATION) <br> * figures 5,8 * <br> --- | 17 | |
| A | EP-A-0 043 432 (IBM) <br> ----- | 1,2,10 | |
| | | | DOMAINES TECHNIQUES RECHERCHES (Int. Cl.5) <br><br> H04L <br> H04N |

Le présent rapport a été établi pour toutes les revendications

| Lieu de la recherche | Date d'achèvement de la recherche | Examinateur |
|---|---|---|
| LA HAYE | 03 AOUT 1993 | BISCHOF J.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P0402)

28